# EUROPÄISCHE PATENTANMELDUNG

(11) **EP 4 703 708 A1**
(43) Veröffentlichungstag der Anmeldung: **04.03.2026**
(21) Anmeldenummer: 25182613.7
(22) Anmeldetag: 13.06.2025
(51) Int. Cl.: G01N 19/04, G01N 3/24

(54) **VERFAHREN UND VORRICHTUNG ZUM TESTEN VON MIT EINEM BLECH ODER EINER PLATTE BESCHICHTETEN BAUTEILEN, INSBESONDERE FÜR LUFTFAHRZEUGE**

(30) Priorität: 28.08.2024 DE 102024124525
(71) Anmelder: AIRBUS Operations GmbH, 21129 Hamburg (DE)
(72) Erfinder: Martins, Jose, 21129 Hamburg (DE)
(74) Vertreter: Airbus Germany

(57) **Zusammenfassung**

Zur Qualitätssicherung von mit einem Blech (14) oder einer Platte beschichteten Bauteilen (10), insbesondere für Luftfahrzeuge, wird ein Testverfahren vorgeschlagen mit den Schritten:
a) Bereitstellen eines zu testenden Bauteils (10, 11),
b) Montieren des Bauteils (10, 11) auf einen Prüfkörper (28), der eine mit einer Scherkante (34) abschließende vertiefte Auflagefläche (36) hat, derart, dass das Blech (14) oder die Platte auf der Auflagefläche (36) aufliegt und die Scherkante (34) gegen eine Schmalseite des Blechs (14) oder Platte anliegt,
c) Relativbewegen des Hauptkörpers (12) des Bauteils (10, 11) und des Prüfkörpers (28) in einer derartigen Richtung, dass die Scherkante (34) weiter gegen das Blech (14) oder die Platte gedrückt wird, und
d) Erfassen der Kraft, mit der das Bauteil (10, 11) und der Prüfkörper (28) relativ zueinander bewegt werden.

## Beschreibung

Die Erfindung betrifft ein Verfahren zum Testen von mit einem Blech oder einer Platte beschichteten Bauteilen, insbesondere für Luftfahrzeuge. Bevorzugte Ausgestaltungen der Erfindung betreffen ein Verfahren zum Testen von mit einem Blech oder einer Platte beschichteten Rahmenbauteilen, wie insbesondere Schienen zur Verwendung in einem Fahrzeug, insbesondere Luftfahrzeug. Weiter betrifft die Erfindung eine Vorrichtung zum Durchführen des Verfahrens.

Zum technologischen Hintergrund wird auf folgende Literaturstelle verwiesen:
[1] DE 10 2020 131 895 A1

Darin wird ein Verfahren zum Anbringen einer Korrosionsschutzlage an einer zu schützenden Oberfläche eines Bauteils sowie ein damit hergestelltes Bauteil beschrieben. Insbesondere handelt es sich dabei um ein Bauteil in Form eines Profilbauteils, mehr insbesondere einer Schiene, insbesondere Schiene zur Verwendung in einem Fahrzeug, insbesondere Luftfahrzeug, mehr insbesondere Schienen ("false rails", "galley rails" und "seat rails") zum Aufstützen von Lasten, wie Schienen für Frachträume oder Kabinen, Sitzschienen oder dergleichen. Derartige Schienen bestehen aus Gewichtsgründen oft aus Leichtmetall, wie Aluminium. Auf wenigstens einer Seite ist eine Beschichtung mit einem Blech oder einer Platte, insbesondere aus einem Titanwerkstoff vorgesehen.

Bei einigen solcher Bauteile erfolgt die Anbringung von Blechen oder Platten mittels eines Bindemittels oder Dichtmittels.

Die Erfindung hat sich zur Aufgabe gestellt, ein Verfahren zum Testen von mit einem Blech oder einer Platte beschichteten Bauteilen, insbesondere für (Rahmen von) Luftfahrzeuge(n), zur Verfügung zu stellen, mit der die Qualität des Bauteils geprüft werden kann.

Zum Lösen dieser Aufgabe schafft die Erfindung ein Verfahren nach Anspruch 1. Eine Vorrichtung zum Durchführen des Verfahrens ist in dem Nebenanspruch angegeben.

Vorteilhafte Ausgestaltungen sind Gegenstand der Unteransprüche.

Die Erfindung schafft gemäß einem Aspekt davon ein Verfahren zum Testen von mit einem Blech oder einer Platte beschichteten Bauteilen, insbesondere für Luftfahrzeuge, umfassend:
a) Bereitstellen eines zu testenden Bauteils,
b) Montieren des Bauteils auf einen Prüfkörper, der eine mit einer Scherkante abschließende vertiefte Auflagefläche hat, derart, dass das Blech oder die Platte auf der Auflagefläche aufliegt und die Scherkante gegen eine Schmalseite des Blechs oder Platte anliegt,
c) Relativbewegen des Bauteils und des Prüfkörpers in einer derartigen Richtung, dass die Scherkante weiter gegen das Blech oder die Platte gedrückt wird, und
d) Erfassen der Kraft, mit der das Bauteil und der Prüfkörper relativ zueinander bewegt werden.

Einige Ausführungsformen des Verfahrens umfassen den weiteren Schritt:
e) Bestimmen der Kraft, ab der sich bei der Relativbewegung das Blech oder die Platte von dem Hauptkörper des Bauteils löst.

Bei einigen Ausführungsformen ist vorgesehen, dass als Haftkraft die in Schritt e) erfasste Kraft dividiert durch die mit dem Blech oder der Platte beschichtete Fläche des Hauptkörpers des getesteten Bauteils bestimmt wird.

Bei einigen Ausführungsformen umfasst Schritt a) den Schritt:
a1) Bereitstellen einer Schiene für ein Luftfahrzeug, die auf einer Seite mit dem Blech oder der Platte beschichtet ist.

Bei einigen Ausführungsformen des Bereitstellschritts ist die Platte oder das Blech eine Korrosionsschutzlage. Bei einigen Ausführungsformen ist die Platte eine Metallplatte. Bei einigen Ausführungsformen wird die Platte oder das Blech aus einem Titanmaterial gebildet. Bei einigen Ausführungsformen wird die Platte oder das Blech aus CRES oder Edelstahl gebildet. Bei anderen Ausführungsformen werden andere Materialien wie insbesondere Kunststoff, mehr insbesondere faserverstärkter Kunststoff, insbesondere CFRP, für die Platte eingesetzt. Die Platte kann auch als Folie ausgebildet sein.

Insbesondere wird eine Schiene bereitgestellt, die in einem Aufbau eines Frachtraums oder einer Kabine oder einer sonstigen Innenraumstruktur oder Bodenstruktur eines Luftfahrzeuges zu verwenden ist.

Bei einigen Ausführungsformen umfasst Schritt a) den Schritt:
a2) Bereitstellen eines Bauteils mit einem Hauptkörper aus einem Aluminiummaterial, der auf wenigstens einer Seite mit dem Blech oder der Platte aus einem anderen Material, insbesondere einem anderen Metall als das Aluminiummaterial beschichtet ist. Das andere Material ist insbesondere korrosionsbeständiger als das Material des Hauptkörpers.

Bei einigen Ausführungsformen umfasst Schritt a) den Schritt:
a3) Bereitstellen des Bauteils, welches mit einem Titanblech oder einer Titanplatte beschichtet ist.

Bei einigen Ausführungsformen umfasst Schritt a) den Schritt:
a4) Bereitstellen eines Teilstücks eines länglichen Bauteils aus einer laufenden Produktion.

Bei einigen Ausführungsformen umfasst Schritt a) den Schritt:
a5) Bereitstellen eines Bauteils aus einem ersten Metall, auf das die Platte oder das Blech mittels eines ausgehärteten Binders oder Dichtmittels, insbesondere Polysulfid oder Polythioether, aufgebracht worden ist.

Bei einigen Ausführungsformen umfasst Schritt a) den Schritt:
a6) Bereitstellen des Bauteils mit dem Blech oder der Platte, die eine Dicke von 0,4 mm bis 1 mm, vorzugsweise 0,4 mm, hat.

Bei einigen Ausführungsformen umfasst Schritt a) den Schritt:
a7) Bereitstellen eines Stücks einer Aluminiumschiene, auf der ein Titanblech oder eine Titanplatte mittels eines ausgehärteten Binders oder Dichtmittels anhaftet.

Bei einigen Ausführungsformen umfasst Schritt a) den Schritt:
a8) Bereitstellen des Bauteils aus der laufenden Produktion nach Durchführen der Beschichtung des Bauteils, insbesondere nach Aushärtung eines Bindemittels oder Dichtmittels, mittels dem das Blech oder die Platte an dem Bauteil anhaftet. Als Bindemittel können neben Dichtmitteln auch Klebstoffe verwendet werden.

Bei einigen Ausführungsformen umfasst Schritt a) den Schritt:
a9) Bereitstellen des Bauteils nach Durchführen einer Wetterbeständigkeitsprüfung.

Bei einigen Ausführungsformen umfasst Schritt b) den Schritt:
b1) Bereitstellen des Prüfkörpers in Form eines massiven Metallblocks. Insbesondere ist der Prüfkörper aus massivem Werkzeugstahl gebildet.

Bei einigen Ausführungsformen umfasst Schritt b) den Schritt:
b2) Bereitstellen des Prüfkörpers, der auf einer Seite mit der vertieften Auflagefläche versehen ist.

Bei einigen Ausführungsformen umfasst Schritt b) den Schritt:
b3) Bereitstellen des Prüfkörpers mit der Scherkante, die zu der Auflagefläche einen Winkel ≥ 80°, insbesondere ≥ 83 Grad aufweist.

Bei einigen Ausführungsformen umfasst Schritt b) den Schritt:
b4) Bereitstellen des Prüfkörpers derart, dass die Scherkante eine von der Auflagefläche aus gemessene Höhe von gleich oder kleiner der Dicke des Blechs/der Platte ist.

Bei einigen Ausführungsformen umfasst Schritt b) den Schritt:
b5) Halten des Bauteils mittels wenigstens eines Halters an dem Prüfkörper.

Bei einigen Ausführungsformen umfasst Schritt b) den Schritt:
b6) Montieren des Bauteils mittels Halter, die auf dem Prüfkörper mittels Schrauben befestigt werden.

Insbesondere erfolgt das Montieren derart, dass die Scherkante lediglich an der Platte/dem Blech jedoch nicht gegen den Hauptkörper des Bauteils, der mit dem Blech oder Platte beschichtet ist, anliegt. Vorzugsweise wird das Bauteil durch Halter lediglich in der Vertiefung gehalten, wobei keine zusätzlichen Spannkräfte aufgewandt werden, die das Blech/die Platte gegen die Auflagefläche drücken würden und somit zusätzliche Reibkräfte verursachen würden. Besonders bevorzugt wird die Auflagefläche beim Test vertikal ausgerichtet, so dass auch keine Gewichtskräfte zwischen Auflagefläche und zu testendem Bauteil wirken.

Bei einigen Ausführungsformen umfasst Schritt c) den Schritt:
c1) Bewegen des Bauteils relativ zu dem Prüfkörper mittels einer Zugprüfmaschine.

Bei einigen Ausführungsformen umfasst Schritt c) den Schritt:
c2) festes Anordnen des Prüfkörpers, insbesondere an einem stationären Rahmen.

Bei einigen Ausführungsformen umfasst Schritt c) den Schritt:
c3) Ziehen des Bauteils in die Richtung entgegen der Scherkante.

Bei einigen Ausführungsformen umfasst Schritt d) den Schritt:
d1) Erfassen der Kraft, die zur Relativbewegung aufgewendet werden muss, über dem Weg der Relativbewegung.

Bei einigen Ausführungsformen umfasst Schritt d) den Schritt:
d2) Erfassen des Maximums der Kraft über den Weg.

Bei einigen Ausführungsformen umfasst Schritt d) den Schritt:
d3) Vergleichen der Kraft, die zur Relativbewegung aufgewandt werden muss, mit einem vorgegebenen Sollwert oder Mindestwert.

Bei einigen Ausführungsformen umfasst Schritt e) den Schritt:
e1) Bestimmen der Fläche, an der das Blech/die Platte an dem getesteten Bauteil anhaftet, wobei Löcher oder sonstige Bereiche ohne Haftung nicht berücksichtigt werden.

Bei einigen Ausführungsformen umfasst Schritt d) den Schritt:
e2) Bestimmen des Maximums der Kraft, die für die Relativbewegung über den Weg aufgewendet werden musste, als Kraft, bei der sich das Blech/die Platte zu lösen beginnt.

Gemäß einem weiteren Aspekt schafft die Erfindung eine Testvorrichtung zum Durchführen des Verfahrens nach einer der voranstehenden Ausgestaltungen, umfassend:
den Prüfkörper,
wenigstens einen Halter zum Halten des Bauteils auf dem Prüfkörper und eine Zugprüfmaschine zum Durchführen der Relativbewegung und zum Erfassen der Kraft zum Durchführen der Relativbewegung.

Besonders bevorzugte Ausgestaltungen des Testverfahrens sind zum Testen der Haftqualität von Titanblechen oder Titanplatten auf Aluminiumschienen ausgebildet. Insbesondere sollen Bauteile mit Korrosionsschutzlage getestet werden, wie sie durch das Verfahren gemäß Literaturstelle [1] erhältlich sind. Für weitere Einzelheiten wird ausdrücklich auf die Literaturstelle 1 verwiesen.

Bevorzugte Ausführungsformen des Testverfahrens sollen die Scherstärke des Blechs oder der Platte, insbesondere aus Titan, bestimmen. Mit bevorzugten Ausführungsformen des Testverfahrens lässt sich die Qualität des Aufbringprozesses, beispielsweise Klebeprozesses, insbesondere mittels eines Dichtmittels oder Haftmittels, aufzeigen.

Ausführungsformen der Erfindung schlagen eine spezielle Geometrie der Testausrüstung zum Durchführen des Tests vor.

Bei bevorzugten Ausführungsformen der Erfindung werden insbesondere Bauteile mit folgenden Materialien getestet. Titanblech/Titanplatte mit einer Dicke von 0,2 mm bis 1 mm, insbesondere 0,4 mm; (lackierte) Schiene aus einem Aluminiummaterial (Alu-Schiene), Dichtmittel (Haftmittel) Polysulfide oder Polythioether (MC238B oder MC780C oder PR1782C oder entsprechend AIMS04-05-001/-002/014/015). Auch anderen Materialien wie insbesondere CRES oder Kunststoff können für die Platte verwendet werden. Als Haftmittel oder Bindemittel können auch Klebstoffe, z.B. auf Basis von z.B. Epoxid, Acryl, Silikon, Polyurethan, Phenol, Silanmodifiziert, etc., verwendet werden.

Einige Ausführungsformen schaffen ein spezifisches Testverfahren für ein spezielles Schienendesign für (Airbus-)Luftfahrzeuge. Insbesondere durch Anpassung des Prüfkörpers lassen sich sehr unterschiedliche hierbei zum Einsatz kommende Schienendesigns testen. Das Profil der Schiene kann z.B. ein H-Profil oder Doppel-T-Profil haben, aber auch ganz unterschiedliche andere Formen, wie z.B. Z-Profil, C-Profil, U-Profil usw. Das Profil kann, muss aber nicht, über die Länge des Bauteils konstant sein; das Bauteil könnte auch an einem oder mehreren sich über die Längsrichtung erstreckenden Bereichen Einbuchtungen, Rücksprünge oder Vorsprünge aufweisen. Das Profil könnte auch konisch zulaufend ausgebildet sein. Insbesondere wird der Prüfkörper entsprechend mit einer an die Kontur der Platte oder des Blechs angepassten (komplementären) Vertiefung bereitgestellt, die mit ihrer Berandung die entsprechend konturierte Platte/das entsprechend konturierte Blech aufnehmen kann.

Mit einigen Ausführungsformen des Testverfahrens lässt sich insbesondere die Qualität der Haftung oder Klebung der Platte oder des Blechs auf dem Hauptkörper überprüfen.

Einige Ausführungsformen schaffen einen Zugtest für spezielle Schienen für Luftfahrzeuge. Insbesondere wird ein Testverfahren zum Bestimmen der Haftkraft durch eine Rahmenschienenzugprüfung vorgeschlagen. Einige Ausführungsformen des Testverfahrens sind zur Bestimmung der Haftkraft zwischen Platten/Blechen und Schienen ausgebildet. Mögliche Testobjekte sind insbesondere Metallschienen und Platten oder Bleche, wobei ein Haftmittel als Zwischenschicht vorgesehen ist. Als Haftmittel (oder Bindemittel) dient beispielsweise ein Kleber oder ein Dichtmittel. Insbesondere ist als Haftmittel ein reaktives Polymer vorgesehen, welches aushärtet und dazu fähig ist, durch Oberflächenhaftung Materialien zu verbinden, und das eine adäquate interne Festigkeit besitzt.

Beispiele für das Haftmittel sind neben Dichtmitteln auch unterschiedliche Klebstoffe, z.B. auf Basis von Epoxid, Acryl, Silikon, Polyurethan, Phenol, Silanmodifiziert, Mehrkomponentensysteme und dergleichen.

Mit bevorzugten Ausgestaltungen des Testverfahrens wird die Haftkraft/Klebestärke zwischen den Platten/Blechen durch Scherkraft bestimmt. Ein Schienentestobjekt (Probe/Schienenprobe, z.B. ein längliches Teilstück einer langen Schiene) wird auf einem Prüfkörper (z.B. Teil/Körper eines Prüfrahmens, Rahmenkörper) auf beiden Seiten mittels Halter (z.B. Klemmen, insbesondere mittels Schrauben aufgeschraubt) montiert und eine Zuglast wird vorzugsweise kontinuierlich, insbesondere parallel zur Schiene, aufgebracht, vorzugsweise bis eine Oberflächenseparation auftritt.

Einige Ausführungsformen der Erfindung weisen wenigstens einen mehrere oder alle der folgenden Vorteile auf:
- Es lässt sich ein unmittelbarer Qualitätstest des Herstellprozesses, insbesondere der Beschichtung, mehr insbesondere des Klebens/Haftens, durchführen
- Insbesondere lässt sich ein unmittelbarer Qualitätstest des Prozesses zum Aufbringen von Blechen oder Platten (insbesondere aus Titan) auf Metallschienen oder dergleichen Hauptkörpern des Bauteils (insbesondere aus Aluminium) durchführen
- spezielle Bestimmungen der Dicke des Haftmittels/Dichtmittels oder sonstiger spezifischer Eigenschaften des Haftmittels/Dichtmittels oder sonstige Bestimmungen oder alternative Testverfahren (wie z.B. Überlappungsschertests oder Rollenschältests) sind nicht erforderlich oder können auf ein Minimum reduziert werden

- es wird ein spezifisches Testverfahren für spezifische Bauteile von Luftfahrzeugen geschaffen
- der Qualitätscheck kann leicht durchgeführt werden

Ausführungsbeispiele werden im Folgenden anhand der beigefügten Zeichnungen näher erläutert. Darin zeigt:
- Fig. 1: einen Schnitt durch ein mit einer Ausführungsform des Testverfahrens zu testendes Bauteil;
- Fig. 2: eine perspektivische Ansicht des zu testenden Bauteils;
- Fig. 3: eine perspektivische Ansicht des Bauteils montiert in einer Testvorrichtung beim Durchführen des Testverfahrens gemäß einer Ausführungsform der Erfindung;
- Fig. 4: einen Querschnitt durch die in Fig. 3 gezeigte Anordnung;
- Fig. 5: eine Seitenansicht eines Prüfkörpers der Testvorrichtung von Fig. 3, wobei weitere innen liegende Bereiche gestrichelt angedeutet sind;
- Fig. 6: eine Vorderansicht des Prüfkörpers;
- Fig. 7: eine Draufsicht auf den Prüfkörper;
- Fig. 8: einen Schnitt durch den Prüfkörper, wobei eine Vertiefung zur Aufnahme eines Blechs des Bauteils zu Darstellungszwecken vergrößert dargestellt ist;
- Fig. 9: ein Beispiel für die Aufzeichnung einer Kraft über den Weg beim Durchführen des Testverfahrens;
- Fig. 10: einen Schnitt durch ein weiteres durch eine Ausführungsform des Testverfahrens zu testendes Bauteil;
- Fig. 11: eine Draufsicht auf noch ein weiteres durch eine Ausführungsform des Testverfahrens zu testendes Bauteil;
- Fig. 12: eine Draufsicht auf noch ein weiteres durch eine Ausführungsform des Testverfahrens zu testendes Bauteil;
- Fig. 13: eine Vorderansicht auf das Bauteil von Fig. 12 von unten in Fig. 12 gesehen;
- Fig. 14: eine Draufsicht auf noch ein weiteres durch eine Ausführungsform des Testverfahrens zu testendes Bauteil und;
- Fig. 15: eine Vorderansicht auf das Bauteil von Fig. 14 von links in Fig. 14 gesehen.

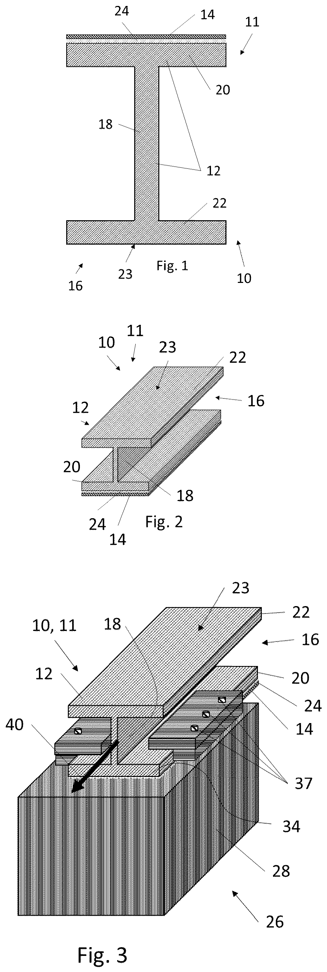

Im Folgenden wird anhand von Ausführungsbeispielen mit Bezug auf die beigefügten Figuren ein Testverfahren zum Testen eines Bauteils 10 für ein Luftfahrzeug beschrieben, welches Bauteil 10 einen Hauptkörper 12 aufweist, der mit einer Platte oder einem Blech 14 beschichtet ist. In dem in Fig. 1 bis 4 dargestellten Beispiel ist das Bauteil 10 eine Schiene 16 mit einem Hauptkörper 12 aus einem ersten Metall, hier einem Aluminiummaterial. Die Schiene 16 ist als Profilschiene ausgebildet und ist in dem dargestellten Beispiel ein H-Profil oder Doppel-T-Profil mit zwei durch einen Steg 18 verbundenen Querflanschen 20, 22 auf, wobei eine nach außen gerichtete Seite eines der Querflansche 20 mit dem Blech 14 beschichtet ist. Das Blech 14 ist insbesondere aus einem zweiten, unterschiedlichen Metall, das z.B. widerstandsfähiger, härter oder korrosionsbeständiger als das erste Metall ist, gebildet. Beispielsweise ist das Blech 14 (oder die Platte) aus einem Titanmaterial gebildet.

Das Bauteil 10 ist insbesondere durch ein aus [1] bekanntes Aufbringverfahren erhältlich. Dabei wird die Platte/das Blech 14 mittels eines aushärtbaren Haftmittels, insbesondere Dichtmittel 24, auf dem Hauptkörper 12 befestigt.

Die Platte/das Blech 14 weist beispielsweise eine Dicke zwischen einschließlich 0,2 mm und 1,0 mm auf. Im Folgenden wird das Testverfahren am Beispiel eines Bauteils 10 in Form einer Alu-Schiene 16 mit einem aus Titanmaterial gebildeten Blech 14 mit einer Dicke von 0,4 mm beschrieben.

Mit dem Testverfahren wird die Haftstärke, mit der das Blech 14 an dem Hauptkörper 12 anhaftet, bestimmt. Damit lässt sich die Qualität des Aufbringprozesses, beispielsweise der in [1] beschriebenen Art, überprüft, ohne dass weitere Tests durchgeführt werden müssen.

Ein Ausführungsbeispiel des Testverfahrens betrifft die Bestimmung der Haftqualität eines Titanblechs - Blech 14 - auf einer Aluminiumschiene - Hauptkörper 12 des Bauteils 10 -. Das Testverfahren bestimmt die Scherstärke des Blechs 14 and zeigt die Qualität des Anhaftprozesses mittels des Dichtmittels 24 auf. Es wird eine spezielle Geometrie einer Testausrüstung 26 vorgeschlagen.

Zunächst wird eine Testprobe 11 aus dem industriellen Prozess bereitgestellt. Fig. 1 und 2 zeigen, dass als Testprobe 11 ein (Teil-)Stück der Schiene 16 mit mittels Dichtmittel 24 angebrachtem Blech 14 bereitgestellt wird. Der Hauptkörper 12 der Schiene 16 ist hier z.B. ein Al-Profil (Pre-MOD), beispielsweise mit einer Höhe von 50 mm. Auf einer zu exponierenden Oberseite der Schiene 16 ist das Blech 14 aus Titanmaterial aufgebracht. Die am Boden von Fig. 1 dargestellte Schnittstelle 23 der Schiene 16 zu einem Querbalken einer Luftfahrzeugstruktur (nicht dargestellt) ist unverändert. Als Dichtmittel 24 ist MC780 mit einer Dicke von 0,05 mm bis 0,2 mm vorgesehen. Das Blech 14 hat hier eine Dicke von 0,4 mm. Dies sind alles nur Beispielwerte.

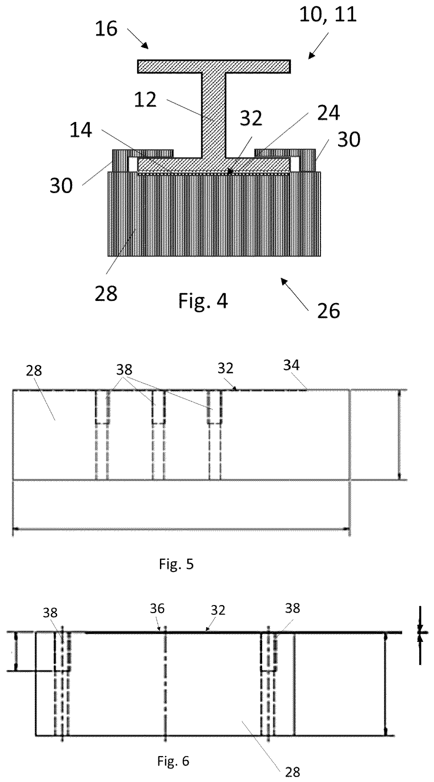

Wie man den Fig. 3 und 4 entnehmen kann, wird die bereit gestellte Testprobe 11 anschließend in die Testausrüstung 26 montiert. Die Testausrüstung 26 weist einen Prüfkörper 28 und wenigstens einen oder mehrere Halter 30 auf. Der Prüfkörper 28 und die Halter 30 sind an die Geometrie der zu testenden Bauteile 10 angepasst.

Wie man den Fig. 5 bis 8 entnehmen kann, die ein Beispiel des Prüfkörpers 28 alleine zeigen, ist der hier dargestellte Prüfkörper 28 aus einem massiven Block aus geeignetem Material, wie z.B. Werkzeugstahl ausgebildet. Auf der Oberseite weist der Prüfkörper 28 eine Vertiefung 32 auf, die zum Aufnehmen des Blechs 14 ausgebildet ist. Im vorderen Bereich ist die Vertiefung 32 durch eine Kante 34 - auch Scherkante genannt - begrenzt. Am Grund der Vertiefung 32 ist eine Auflagefläche 36 ausgebildet. Die Tiefe der Vertiefung 32 - und damit die Höhe der Kante 34 - ist an die Dicke des Blechs 14 angepasst. Beispielsweise ist die Vertiefung 0,4 mm tief. Die Tiefe kann auch etwas kleiner als die Dicke des Blechs 14/ der Metalplatte sein, solange das Blech 14/die Platte durch die Kante 34 mit genügender Kraft beaufschlagbar ist, um ein Abscheren herbei zu führen.

Die Halter 30 sind mittels Maschinenschrauben 37, die in Gewindelöcher 38 des Prüfkörpers 28 eingeschraubt werden, auf dem Prüfkörper 28 montierbar. Die Halter 30 sind so ausgebildet, dass die Testprobe 11 - das zu testende Bauteil 10 - in der Vertiefung 32 gehalten wird, vorzugsweise dabei aber nicht zusätzlich auf die Auflagefläche 36 gespannt wird.

Die Geometrie und die Dimensionen von Prüfkörper 28 und Halter 30 sollen entsprechend der/des in dem Aufbringprozess auf den Hauptkörper 12 aufzubringenden Platte/Blechs 14 angepasst werden.

Mit dem Testverfahren wird die Haftstärke zwischen den Platten/Blechen 14 und den Schienen 16 mit einem Haftmittel durch Scherkraft bestimmt. Die Testprobe - Bauteil 10 - wird auf dem Prüfkörper 28 mittels der Halter 30 an beiden Seiten montiert.

Mittels einer in den Figuren nicht gezeigten Zugprüfmaschine (auf dem Markt erhältlich) wird dann eine Zugkraft 40 kontinuierlich parallel zu der Schiene 16 aufgebracht, bis eine Oberflächenseparation auftritt.

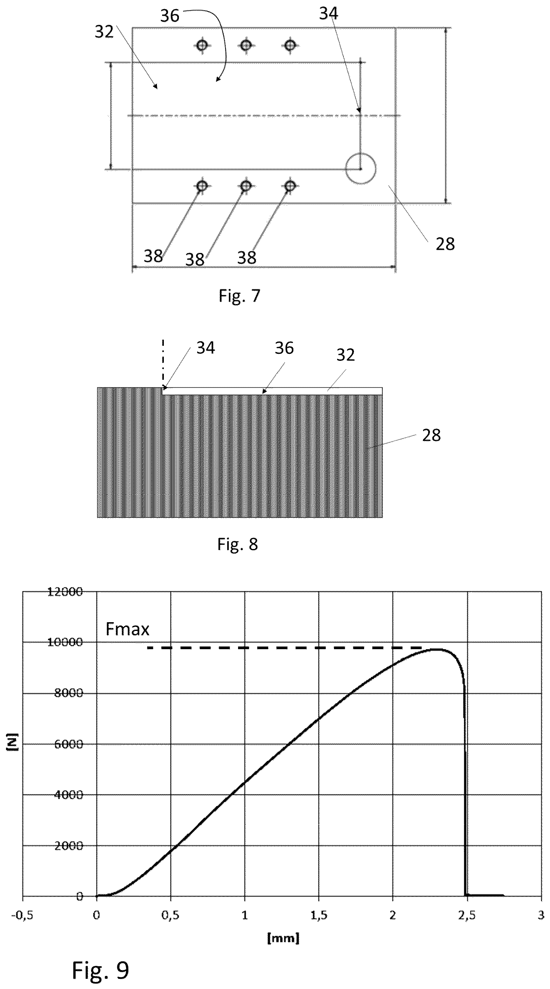

Beispielsweise ist der Prüfkörper 28 Teil eines stationären Rahmens oder wird fest mit einem derartigen Rahmen verbunden. Anschließend wird eine Zuglast 40 auf den Hauptkörper 12 aufgebracht, das Ziehen erfolgt entgegen der Ausrichtung der Kante 34, also nach links in Fig. 8 gesehen. Bei anderen Ausführungen wird der Prüfkörper 28 bewegt (dann nach rechts in Fig. 8) während der Hauptkörper 12 stationär gehalten wird (oder in die Gegenrichtung bewegt wird).

Die Zugkraft (Last) wird kontinuierlich während des Ziehens (Beispiel für eine Relativbewegung zwischen Prüfkörper 28 und Hauptkörper 12) aufgezeichnet. Fig. 9 stellt ein Beispiel für eine Kurve der Kraft in Newton über den Weg in Millimetern dar. Diese Kurve stellt ein Beispiel für eine Kurve für die Haftstärke dar.

Die Haftstärke wird berechnet durch Bestimmen der Stärke (Kraft) an dem Bruch gemäß der Belastungskurve (Fig. 9) und Dividieren dieses Werts durch die Haftfläche (echte Oberfläche der Klebefläche ohne Löcher). Die Kraft an dem Bruch lässt sich insbesondere an dem Maximum der Kurve der Belastung ablesen.

Danach werden beide Oberflächen - die von dem Hauptkörper 12 der Schiene 16 und die von dem Blech 14 - untersucht, um den Modus des Versagens zu bestimmen. Mögliche Modi können der folgenden Tabelle entnommen werden:

| | |
|---|---|
| kohäsives Versagen | Ein Versagen der Bindung wird kohäsiv genannt, wenn das Versagen in dem Haftmittel beginnt und sich darin ausbreitet, wobei Haftmittel auf beiden Substraten (Hauptkörper und Blech) verbleibt |
| adhäsives Versagen | ein adhäsives Versagen findet an der Substrat-Haftmittel-Schnittstelle statt |
| Produktionsversagen | Produktionsversagen können Fehler in der Benetzung, Flächen ohne Haftmittel oder andere Defekte aus dem Produktionsprozess sein |
| Misch-Versagen | Ein Mischversagen ist eine Mischung unterschiedlicher Versagensmodi an der Trennungs-Fläche. |
| | Beispielsweise werden die Anteile der unterschiedlichen Versagensmodi in Prozent angegeben werden |

Eine Testvorrichtung zum Durchführen des Testverfahrens weist die Testausrüstung 26 gemäß Fig. 4 bis 7 und eine Zugprüfmaschine auf. Zugprüfmaschinen sind von unterschiedlichen Herstellern auf dem Markt erhältlich und werden daher hier nicht näher beschrieben oder gezeigt.

Eine Kalibrierung der Testvorrichtung soll in Übereinstimmung mit der Bedienungsanleitung der Zugprüfmaschine vorgenommen werden. Die Zugprüfmaschine muss eine ausreichende Kapazität und Sensitivität aufweisen um mit einer vorgegebenen Geschwindigkeit, beispielsweise 2,5 mm/min (entsprechend der Norm ASTM E2658 Klasse B) zu ziehen. Die Zugprüfmaschine sollte eine entsprechende Einrichtung zum Aufzeichnen der Kurve (vorzugsweise entsprechend DIN EN ISO7500-1) aufweisen oder mit einer solchen verbunden sein. Weitere Vorgaben für eine Ausrichtung können der Norm ASTM-E1012 Klasse 10 entnommen werden.

Für besonders zuverlässige Testergebnisse ist bei einigen Ausführungsformen vorgesehen, dass die Kante 34 (Scherkante an dem auch als Grundplattentestprobenhalter genannten Prüfkörper 28) einen Winkel von ≥83° aufweist. Während des Testens kann natürlicherweise auftretender Abrieb an der Kante zu Fehlern im Testverfahren führen. In diesem Fall kann die Kante wieder auf einen Winkel ≥83° gefräst werden.

Das Testverfahren kann z.B. durchgeführt werden, um die Qualität einer Charge (insbesondere jeder Charge) aus einer Produktion zu testen. Beispielsweise werden hierbei mehrere Testproben getestet, z.B. mehr als vier, insbesondere mehr als neun.

Für Tests ohne Umweltaussetzung können die Testproben 11 unmittelbar nach dem Aushärtprozess getestet werden. Bei Tests nach Umweltaussetzung (z.B. Wetterbeständigkeitsprüfung) lässt man die Proben vorteilhafterweise auf Zimmertemperatur (z.B. 23°± 3° C) in dem Testmedium für maximal 24 h abkühlen, nachdem die Aussetzung beendet worden ist.

Falls nicht anders vorgegeben, wird der Test bei Zimmertemperatur (z.B. 23°± 3° C) durchgeführt.

Die Testproben werden in der Zugprüfmaschine Klasse B gemäß ASTM E2658 (Klasse 1 in DIN EN ISO7500-1) mit einer freien Klemmlänge (Testlänge) von wenigstens 100 mm durchgeführt. Der Test wird mit einer vorgegebenen Geschwindigkeit (z.B. 2,5 mm/min) durchgeführt, vorzugsweise bis sich das Blech 14 bei der maximalen Kraft Fₘₐₓ von dem Hauptkörper 12 trennt.

Bei anderen, weniger bevorzugten Ausführungen wird der Test bis zu einer vorbestimmten Kraft durchgeführt. Ist bis dahin kein Bruch erfolgt, ist die Testprobe in Ordnung.

Bei einigen Ausführungsformen wird ein Bauteil 10, das mit einer Metallplatte oder einem Metallblech beschichtet ist getestet. Die Metallplatte oder das Metallblech dienen insbesondere als Korrosionsschutzschicht. Es sind Titanmaterialien oder andere zu diesem Zweck geeigneten Materialien wie Edelstahl oder CRES denkbar. Außer Metallen können auch andere Materialien für die Platte, wie z.B. Kunststoff, insbesondere faserverstärkter Kunststoff, wie z.B. CFRP, getestet werden.

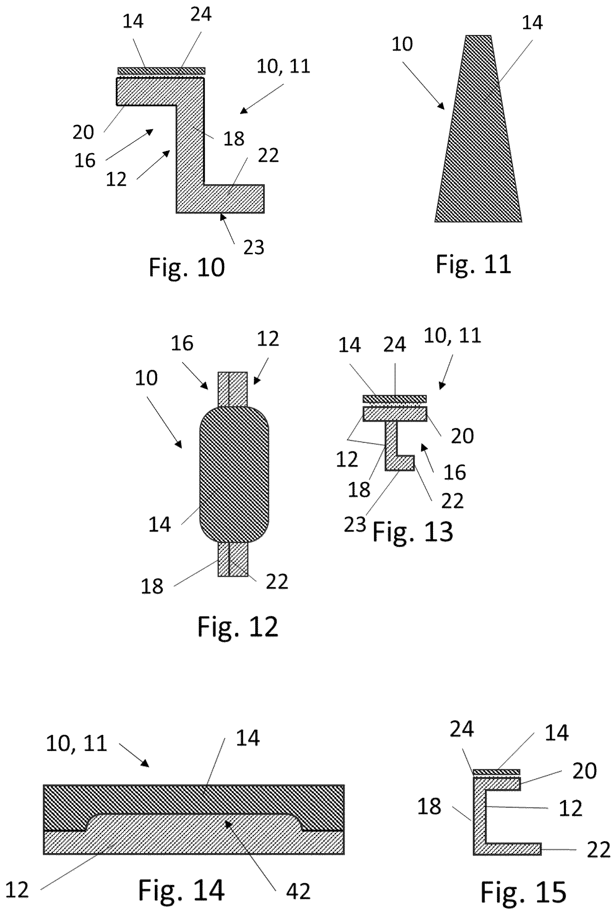

Die Profilformen des zu testenden Bauteils 10 können unterschiedlich sein, wie in den Fig. 10 bis 15 gezeigt.

Anstelle von Schienen 16 mit H- oder Doppel-T-Profilen können auch Schienen 16 mit T-Profilen oder Z-Profilen (siehe Fig. 10) oder U-Profilen (siehe Fig. 14 und 15) oder C-Profilen getestet werden. Das Profil muss nicht über die gesamte Länge der Schiene 16 gleichförmig oder gleich sein. Wie in Fig. 11 gezeigt, können das Bauteil 10 oder auch nur dessen beschichteter Profilbereich des Hauptkörpers 12 auch konisch zulaufend sein. Der beschichtete Profilbereich des Hauptkörpers 12 kann auch andere Ausdehnungen oder Formen wie ein weiterer Profilbereich des Hauptkörpers 12 aufweisen, siehe das Beispiel Fig. 12 und 13, wo der beschichtete Profilbereich mit dem Blech 14 als Rechteck mit abgerundeten Ecken geformt ist, wobei der weitere Bereich in Längsrichtung darüber vorsteht, aber schmaler ausgebildet ist. Auch Einbuchtungen 42 sind möglich, siehe Fig. 14 und 15, oder auch entsprechend Ausbuchtungen (nicht dargestellt).

Die Vertiefung 32 ist bei bevorzugten Ausgestaltungen des Prüfkörpers 28 entsprechend an die Kontur des Blechs 14 oder der Platte (komplementär) angepasst.

Zur Qualitätssicherung von mit einem Blech (14) oder einer Platte beschichteten Bauteilen (10), insbesondere für Luftfahrzeuge, ist ein Testverfahren vorgeschlagen worden mit den Schritten:
a) Bereitstellen eines zu testenden Bauteils (10, 11),
b) Montieren des Bauteils (10, 11) auf einen Prüfkörper (28), der eine mit einer Scherkante (34) abschließende vertiefte Auflagefläche (36) hat, derart, dass das Blech (14) oder die Platte auf der Auflagefläche (36) aufliegt und die Scherkante (34) gegen eine Schmalseite des Blechs (14) oder Platte anliegt,
c) Relativbewegen des Hauptkörpers (12) des Bauteils (10, 11) und des Prüfkörpers (28) in einer derartigen Richtung, dass die Scherkante (34) weiter gegen das Blech (14) oder die Platte gedrückt wird, und
d) Erfassen der Kraft (40), mit der das Bauteil (10, 11) und der Prüfkörper (28) relativ zueinander bewegt werden.

### Bezugszeichenliste:

- 10: Bauteil
- 11: Testprobe
- 12: Hauptkörper
- 14: Blech (oder Platte)
- 16: Schiene
- 18: Steg
- 20: oberer oder nach außen zu richtender Querflansch
- 22: unterer oder nach innen zu richtender Querflansch
- 23: Schnittstelle
- 24: Dichtmittel (Beispiel für Haftmittel/Mittel zum Haften)
- 26: Testausrüstung
- 28: Prüfkörper
- 30: Halter
- 32: Vertiefung
- 34: Kante (Scherkante)
- 36: Auflagefläche
- 37: Maschinenschraube
- 38: Gewindeloch
- 40: Kraft (beispielsweise Zugkraft)
- 42: Einbuchtung
- Fmax: Maximale Kraft = Kraft bei Oberflächenseparation

## Patentansprüche

1. Verfahren zum Testen von mit einem Blech (14) oder einer Platte beschichteten Bauteilen (10), insbesondere für Luftfahrzeuge, umfassend:
a) Bereitstellen eines zu testenden Bauteils (10, 11),
b) Montieren des Bauteils (10, 11) auf einen Prüfkörper (28), der eine mit einer Scherkante (34) abschließende vertiefte Auflagefläche (36) hat, derart, dass das Blech (14) oder die Platte auf der Auflagefläche (36) aufliegt und die Scherkante (34) gegen eine Schmalseite des Blechs (14) oder Platte anliegt,
c) Relativbewegen des Hauptkörpers (12) des Bauteils (10, 11) und des Prüfkörpers (28) in einer derartigen Richtung, dass die Scherkante (34) weiter gegen das Blech (14) oder die Platte gedrückt wird, und
d) Erfassen der Kraft, mit der das Bauteil (10, 11) und der Prüfkörper (28) relativ zueinander bewegt werden.

2. Verfahren nach Anspruch 1, **gekennzeichnet durch** den weiteren Schritt:
e) Bestimmen der Kraft, ab der sich bei der Relativbewegung das Blech (14) oder die Platte von dem Bauteil (10, 11) löst.

3. Verfahren nach Anspruch 2, **dadurch gekennzeichnet,**
**dass** als Haftkraft die in Schritt e) erfasste Kraft dividiert durch die mit dem Blech (14) oder der Platte verbundene Fläche des getesteten Bauteils (10, 11) bestimmt wird.

4. Verfahren nach einem der voranstehenden Ansprüche, **dadurch gekennzeichnet,**
**dass** Schritt a) wenigstens einen oder mehrere der folgenden Schritte umfasst:
a1) Bereitstellen einer Schiene (16) für ein Luftfahrzeug, die auf einer Seite mit dem Blech (14) oder der Platte beschichtet ist,
a2) Bereitstellen eines Bauteils (10, 11) mit einem Hauptkörper (12) aus einem Aluminiummaterial, der auf wenigstens einer Seite mit dem Blech (14) oder der Platte aus einem anderen Metall als das Aluminiummaterial beschichtet ist,
a3) Bereitstellen des Bauteils (10, 11), dessen Hauptkörper (12) mit einem Titanblech oder einer Titanplatte beschichtet ist,
a4) Bereitstellen eines Teilstücks eines länglichen Bauteils (10, 11) aus einer laufenden Produktion als Testprobe (11);
a5) Bereitstellen eines Bauteils mit einem Hauptkörper (12) aus einem ersten Metall, auf den die Platte (14) oder das Blech mittels eines ausgehärteten Binders oder Dichtmittels (24), insbesondere Polysulfid oder Polythioether, aufgebracht worden ist,
a6) Bereitstellen des Bauteils (10, 11) mit dem Blech oder der Platte, die eine Dicke von 0,4 mm bis 1 mm, vorzugsweise 0,4 mm hat;
a7) Bereitstellen eines Stücks einer Aluminiumschiene, auf der ein Titanblech oder eine Titanplatte mittels eines ausgehärteten Binders oder Dichtmittels (24) anhaftet;
a8) Bereitstellen des Bauteils (10, 11) aus der laufenden Produktion nach Durchführen der Beschichtung des Bauteils, insbesondere nach Aushärtung eines Bindemittels oder Dichtmittels (24), mittels dem das Blech (14) oder die Platte an dem Hauptkörper (12) des Bauteils (10, 11) anhaftet;
a9) Bereitstellen des Bauteils (10, 11) nach Durchführen einer Wetterbeständigkeitsprüfung.

5. Verfahren nach einem der voranstehenden Ansprüche, **dadurch gekennzeichnet,**
**dass** Schritt b) wenigstens einen oder mehrere der folgenden Schritte umfasst:
b1) Bereitstellen des Prüfkörpers (28) in Form eines massiven Metallblocks;
b2) Bereitstellen des Prüfkörpers (28), der auf einer Seite mit der vertieften Auflagefläche (36) versehen ist,
b3) Bereitstellen des Prüfkörpers (28) mit der Scherkante (34), die zu der Auflagefläche (36) einen Winkel ≥ 80°, insbesondere ≥ 83 Grad aufweist,
b4) Bereitstellen des Prüfkörpers (28) derart, dass die Scherkante (34) eine von der Auflagefläche aus gemessene Höhe von gleich oder kleiner der Dicke des Blechs (14) /der Platte ist,
b5) Halten des Bauteils (10, 11) mittels wenigstens eines Halters (30) an dem Prüfkörper (28),
b6) Montieren des Bauteils (10, 11) mittels Halter, die auf dem Prüfkörper (28) mittels Schrauben befestigt werden;
b7) Bereitstellen eines Rahmenteils als Prüfkörper (28).

6. Verfahren nach einem der voranstehenden Ansprüche, **dadurch gekennzeichnet,**
**dass** Schritt c) wenigstens einen oder mehrere der folgenden Schritte umfasst:
c1) Bewegen des Hauptkörpers (12) des Bauteils (10, 11) relativ zu dem Prüfkörper (28) mittels einer Zugprüfmaschine;
c2) festes Anordnen des Prüfkörpers (28), insbesondere an einem stationären Rahmen;
c3) Ziehen des Hauptkörpers (12) des Bauteils (10, 11) in die Richtung entgegen der Scherkante (34);
c4) Aufbringen einer Zugbelastung;
c5) Relativbewegung in Richtung parallel zur Längsrichtung des insbesondere als Schiene (16) ausgebildeten Bauteils (10, 11);
c6) Relativbewegen, bis eine Oberflächenseparation auftritt.

7. Verfahren nach einem der voranstehenden Ansprüche, **dadurch gekennzeichnet,**
**dass** Schritt d) wenigstens einen oder mehrere der folgenden Schritte umfasst:
d1) Erfassen der Kraft, die zur Relativbewegung aufgewendet werden muss,
über dem Weg der Relativbewegung;
d2) Erfassen des Maximums der Kraft über den Weg;
d3) Vergleichen der Kraft, die zur Relativbewegung aufgewandt werden muss,
mit einem vorgegebenen Sollwert oder Mindestwert;
d4) Überwachen der Last während der Relativbewegung;
d5) Aufzeichnen einer Haftkraftkurve.

8. Verfahren nach Anspruch 2 oder einem der Ansprüche 3 bis 7, soweit auf Anspruch 2 zurückbezogen, **dadurch gekennzeichnet,**
**dass** Schritt e) wenigstens einen oder mehrere der folgenden Schritte umfasst:
e1) Bestimmen der Fläche, an der das Blech/die Platte an dem getesteten Bauteil anhaftet, wobei Löcher oder sonstige Bereiche ohne gewollte Haftung nicht berücksichtigt werden,
e2) Bestimmen des Maximums der Kraft, die für die Relativbewegung über den Weg aufgewendet werden musste, als Kraft, bei der sich das Blech/die Platte zu losen beginnt.

9. Testvorrichtung zum Durchführen des Verfahrens nach einem der voranstehenden Ansprüche, umfassend:
den Prüfkörper (28),
wenigstens einen Halter (30) zum Halten des Bauteils (10, 11) auf dem Prüfkörper (28) und
eine Zugprüfmaschine zum Durchführen der Relativbewegung und zum Erfassen der Kraft zum Durchführen der Relativbewegung.
